# EUROPEAN PATENT SPECIFICATION

(11) **EP 3 090 156 B1**
(45) Date of publication and mention of the grant of the patent: **30.01.2019**
(21) Application number: 14833169.7
(22) Date of filing: 19.12.2014
(51) Int. Cl.: F01N 3/20, F01N 11/00

(54) **LIQUID QUANTITY DETECTING DEVICE**
VORRICHTUNG ZUR ERKENNUNG VON FLÜSSIGKEITSMENGEN
DISPOSITIF DE DÉTECTION DE QUANTITÉ DE LIQUIDE

(30) Priority: 25.12.2013 JP 2013266723
(43) Date of publication of application: 09.11.2016
(73) Proprietor: TOYOTA JIDOSHA KABUSHIKI KAISHA, Toyota-shi, Aichi-ken, 471-8571 (JP); KABUSHIKI KAISHA TOYOTA JIDOSHOKKI, Kariya-shi, Aichi 448-8671 (JP)
(72) Inventor: YOKOI, Tatsuhisa, Toyota-shi Aichi-ken 471-8571 (JP); OTA, Kenji, Kariya-shi Aichi-ken 448-8671 (JP)
(74) Representative: Intès, Didier Gérard André
(86) International application number: PCT/IB2014/002844
(87) International publication number: WO 2015/097526

(56) References cited:
- WO-A1-2013/157095
- DE-A1-102012 001 580
- DE-A1-102012 204 389
- US-A1- 2010 086 446
- US-A1- 2012 304 626

## Description

### BACKGROUND OF THE INVENTION

### 1. Field of the Invention

The invention relates to a liquid quantity detecting device that is mounted on a vehicle.

### 2. Description of Related Art

In order to purify exhaust gas in an internal combustion engine, there is known a device that supplies an addition liquid to an exhaust passage. For example, a device described in Published Japanese Translation of PCT Application No. 2007-522370 is designed to supply an addition liquid such as urea water or the like into an exhaust passage, with a view to reducing and purifying nitrogen oxides (NOx) in exhaust gas by a catalyst.

It should be noted herein that the purification of exhaust gas becomes difficult when the quantity of the addition liquid stored in a tank becomes small. Thus, with the device described in Published Japanese Translation of PCT Application No. 2007-522370, a residual quantity of the addition liquid in the tank is monitored, and a notification on the residual quantity of the addition liquid is given when the residual quantity of the addition liquid becomes smaller than a lower-limit filling level.

In general, in the case where the residual quantity of a liquid in a tank is monitored, there is often employed a level sensor that detects the liquid surface level of the liquid stored in the tank. In the case of this level sensor, when the liquid surface in the tank is inclined on a slope or the like, the residual quantity of the liquid in the tank, which is detected based on a sensor value of the level sensor, is different from an actual residual quantity of the liquid. Therefore, misinformation may be transmitted in the case where a notification on the residual quantity as described above is given. US Patent Application Publication US 2012/0304626 A1 disclosed an alternative method for determining an amount of liquid removed from a tank and reducing agent supply device for a motor vehicle.

### SUMMARY OF THE INVENTION

This invention provides a liquid quantity detecting device that can restrain misinformation on the residual quantity of an addition liquid stored in a tank from being transmitted.

A liquid quantity detecting device according to one aspect of the invention is applied to a vehicle that is equipped with an exhaust gas control apparatus that adds an addition liquid for purifying exhaust gas to an exhaust passage of an internal combustion engine. Then, the liquid quantity detecting device is equipped with a tank that stores the addition liquid, and a level sensor that detects a liquid surface level of the addition liquid stored in the tank. Then, this liquid quantity detecting device is equipped with an update unit that updates the residual quantity of the addition liquid in the tank, and a notification unit that gives a notification on the residual quantity of the addition liquid when the residual quantity of the addition liquid updated by the update unit is equal to or smaller than a predetermined threshold.

Then, in updating the residual quantity of the addition liquid, when a first condition including a condition that a vehicle is stationary is fulfilled, the update unit executes a first update process of subtracting a total quantity of the addition liquid added from the last update of the residual quantity of the addition liquid to the current update of the residual quantity of the addition liquid from the last-updated residual quantity of the addition liquid, and setting a value obtained through subtraction as the updated residual quantity of the addition liquid.

The vehicle is stopped not only on a flat road but also on a slope. Therefore, when the vehicle is stopped, there is also a possibility of the vehicle being stopped on a slope, and the possibility of the liquid surface in the tank being inclined cannot be categorically denied. Therefore, when the vehicle is stopped, the residual quantity of the addition liquid detected based on a sensor value of the level sensor cannot be completely trusted. On the other hand, in updating the residual quantity of the addition liquid, in the case where the total quantity of the addition liquid added from the last update of the residual quantity of the addition liquid to the current update of the residual quantity of the addition liquid is subtracted from the last-updated residual quantity of the addition liquid and the value obtained through subtraction is set as the updated residual quantity of the addition liquid, namely, in the case where a current residual quantity of the addition liquid is calculated by subtracting a later-consumed quantity of the addition liquid from the last-updated residual quantity of the addition liquid, the current sensor value of the level sensor is irrelevant in updating the residual quantity of the addition liquid. Accordingly, when the residual quantity of the addition liquid is thus updated, the residual quantity of the addition liquid can be grasped without being influenced by the inclination of the liquid surface, even in the case where the vehicle is stopped on a slope.

Thus, with this configuration, when the first condition including the condition that the vehicle be stopped is fulfilled, the aforementioned first update process of obtaining the current residual quantity of the addition liquid by subtracting the later-consumed quantity of the addition liquid from the last-updated residual quantity of the addition liquid is executed. Accordingly, in the case where there is even the slightest possibility of the liquid surface of the addition liquid being inclined, the residual quantity of the addition liquid is updated according to a method that is not influenced by the inclination of the liquid surface. Therefore, misinformation on the residual quantity of the addition liquid can be restrained from being transmitted.

In the aforementioned liquid quantity detecting device, the update unit executes a second update process of setting a residual quantity of the addition liquid detected based on a sensor value of the level sensor as the updated residual quantity of the addition liquid when a second condition including a condition that a fluctuation width of the sensor value of the level sensor have remained equal to or smaller than a predetermined value for a predetermined time or more during traveling of the vehicle is fulfilled.

When the vehicle travels on a flat road at a constant speed, the liquid surface of the addition liquid stored in the tank is almost horizontal, and the liquid surface remains stable without much swaying. Therefore, in the case where the residual quantity of the addition liquid is detected based on the sensor value of the level sensor in this state, the actual residual quantity of the addition liquid is reflected by the sensor value of the level sensor, so the residual quantity of the addition liquid can be accurately detected. Accordingly, when the vehicle travels on a flat road at a constant speed, the residual quantity of the addition liquid can be accurately detected by setting the residual quantity of the addition liquid detected based on the sensor value of the level sensor as the updated residual quantity of the addition liquid in updating the residual quantity of the addition liquid.

It should be noted herein that when the vehicle travels on a flat road at a constant speed, the change in the sensor value of the level sensor remains small for a longer time than when the vehicle accelerates or decelerates at a constant acceleration or when the vehicle travels on a slope at a constant speed. Accordingly, when the fluctuation width of the sensor value of the level sensor has remained equal to or smaller than a predetermined value for a predetermined time or more, it can be determined that the vehicle travels on a flat road at a constant speed.

Thus, with this configuration, the aforementioned second condition is provided to determine that the vehicle travels on a flat road at a constant speed and the liquid surface is held horizontal. When the second condition is fulfilled, the aforementioned second update process of obtaining the current residual quantity of the addition liquid based on the sensor value of the level sensor is executed. Accordingly, when the liquid surface of the addition liquid is likely not to be inclined, the residual quantity of the addition liquid is updated according to a method that is more accurate than the aforementioned first update process. Therefore, this configuration also makes it possible to restrain misinformation on the residual quantity of the addition liquid from being transmitted.

In the aforementioned liquid quantity detecting device, the vehicle is equipped with an acceleration sensor that detects a vehicle acceleration, and the update unit executes the aforementioned first update process when a condition that a sensor value of the acceleration sensor be a value outside a predetermined range is fulfilled, in updating the residual quantity of the addition liquid. Besides, the update unit preferably executes the aforementioned first update process when the aforementioned first condition is fulfilled while there is an abnormality in the acceleration sensor.

In the case where the vehicle is provided with an acceleration sensor, the inclination of a road surface can be detected based on the sensor value of the acceleration sensor. Therefore, in the case where the sensor value of the acceleration sensor is a value outside the predetermined range (e.g., in the case where the sensor value of the acceleration sensor is not a value close to "0"), it can be determined that the road surface is inclined, and that the liquid surface of the addition liquid is also inclined. Thus, with this configuration, when it can be determined that the sensor value of the acceleration sensor is a value outside the predetermined range and that the liquid surface is inclined, the residual quantity of the addition liquid is updated through the aforementioned first update process that is not influenced by the inclination of the liquid surface.

It should be noted herein that when there is an abnormality in the acceleration sensor, a determination on the inclination cannot be made based on the sensor value of the acceleration sensor. Thus, with this configuration, the possibility of the liquid surface being inclined cannot be denied in the case where the aforementioned first condition for making a determination on the possibility of the liquid surface being inclined is fulfilled when there is an abnormality in the acceleration sensor, so the residual quantity of the addition liquid is updated through the aforementioned first update process that is not influenced by the inclination of the liquid surface. Accordingly, the residual quantity of the addition liquid can be appropriately updated even when there is an abnormality in the acceleration sensor.

In the aforementioned liquid quantity detecting device, the vehicle is equipped with an acceleration sensor that detects a vehicle acceleration, and the update unit executes the aforementioned second update process when a condition that a sensor value of the acceleration sensor be a value within a predetermined range is fulfilled, in updating the residual quantity of the addition liquid. Besides, the update unit preferably executes the aforementioned second update process when the aforementioned second condition is fulfilled while there is an abnormality in the acceleration sensor.

As described above, in the case where the vehicle is provided with an acceleration sensor, the inclination of the road surface can be detected based on the sensor value of the acceleration sensor. Therefore, when the sensor value of the acceleration sensor is a value within the predetermined range (e.g., when the sensor value of the acceleration sensor is a value close to "0"), it can be determined that the road surface is not inclined, and that the liquid surface of the addition liquid is also horizontal. Thus, with this configuration, when it can be determined that the sensor value of the acceleration sensor is a value within the predetermined range and that the liquid surface is not inclined, the residual quantity of the addition liquid is updated through the aforementioned second update process of updating the residual quantity of the addition liquid based on the sensor value of the level sensor.

It should be noted herein that when there is an abnormality in the acceleration sensor, a determination on the inclination cannot be made based on the sensor value of the acceleration sensor. Thus, with this configuration, if the aforementioned second condition is fulfilled when there is an abnormality in the acceleration sensor, it can be determined that the liquid surface of the addition liquid is horizontal and stable, so the residual quantity of the addition liquid is updated through the aforementioned second update process. Accordingly, the residual quantity of the addition liquid can be appropriately updated even when there is an abnormality in the acceleration sensor.

Incidentally, a reducing liquid that is added to reduce and purify NOx in exhaust gas can be adopted as the aforementioned addition liquid.

### BRIEF DESCRIPTION OF THE DRAWINGS

Features, advantages, and technical and industrial significance of one exemplary embodiment of the invention will be described below with reference to the accompanying drawings, in which like numerals denote like elements, and wherein:
FIG. 1 is a schematic view showing an internal combustion engine to which a liquid quantity detecting device according to the embodiment of the invention is applied, and a peripheral configuration of the internal combustion engine, as to the liquid quantity detecting device;
FIG. 2 is a flowchart showing a series of processing procedures for issuing a warning on the residual quantity of urea water in the embodiment of the invention; and
FIG. 3 is a flowchart showing a series of processing procedures for issuing a warning on the residual quantity of urea water in a modification example of the embodiment of the invention.

### DETAILED DESCRIPTION OF EMBODIMENT

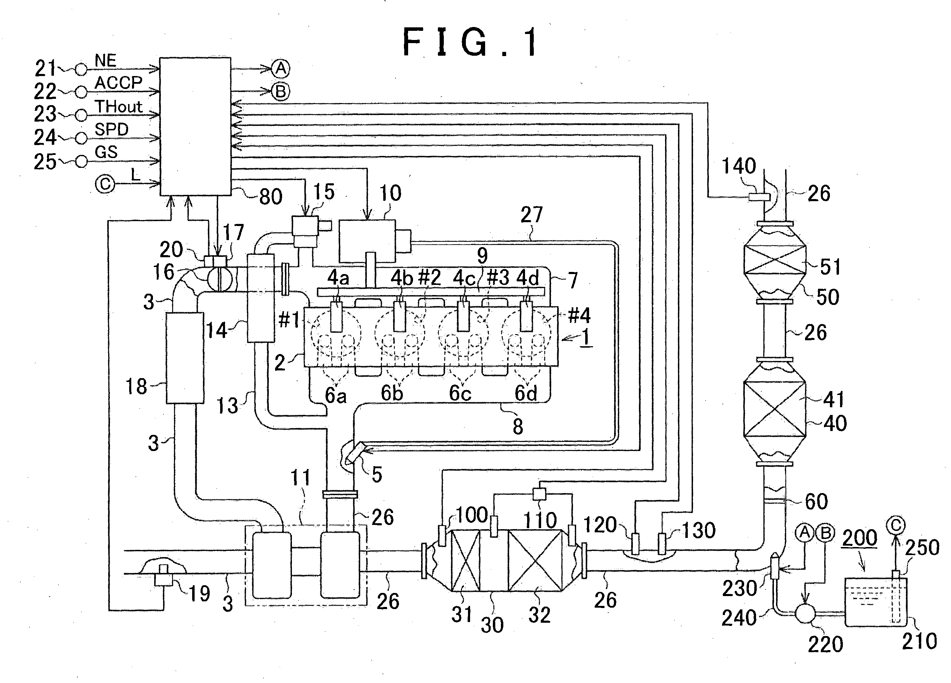

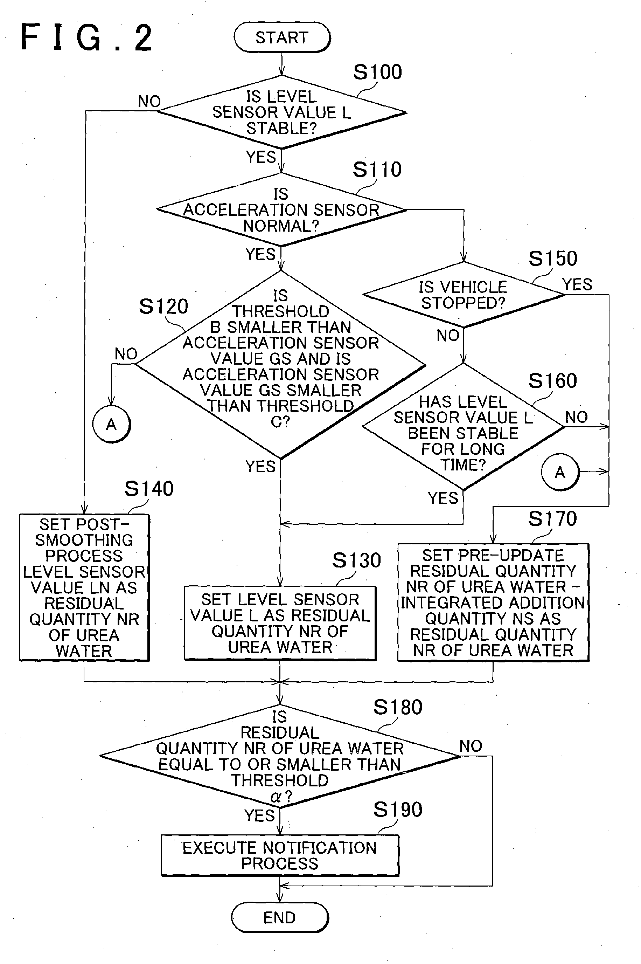

Hereinafter, a liquid quantity detecting device will be described with reference to FIG. 1 and FIG. 2, as to the embodiment of the invention concretized in a vehicle that is equipped with a purification device that purifies exhaust gas in an internal combustion engine. Incidentally, the internal combustion engine in the present embodiment of the invention is a diesel engine, and will be referred to hereinafter simply as "an engine".

As shown in FIG. 1, an engine 1 is provided with a plurality of cylinders #1 to #4. A cylinder head 2 is mounted with a plurality of fuel injection valves 4a to 4d. These fuel injection valves 4a to 4d inject fuel to combustion chambers of the corresponding cylinders #1 to #4 respectively. Besides, the cylinder head 2 is provided with intake ports for introducing fresh air into the cylinders, and exhaust ports 6a to 6d for discharging combustion gas to the outside of the cylinders, in such a manner as to correspond to the cylinders #1 to #4 respectively.

The fuel injection valves 4a to 4d are connected to a common rail 9 that accumulates high-pressure fuel. The common rail 9 is connected to a supply pump 10. The supply pump 10 sucks in the fuel in a fuel tank, and supplies high-pressure fuel to the common rail 9. The high-pressure fuel supplied to the common rail 9 is injected into the cylinders from the fuel injection valves 4a to 4d when the fuel injection valves 4a to 4d are opened respectively.

An intake manifold 7 is connected to the intake ports. The intake manifold 7 is connected to an intake passage 3. An intake throttle valve 16 for adjusting the quantity of intake air is provided in this intake passage 3.

An exhaust manifold 8 is connected to the exhaust ports 6a to 6d. The exhaust manifold 8 is connected to an exhaust passage 26. A turbocharger 11 that supercharges the intake air introduced into the cylinders with the aid of an exhaust pressure is provided in the exhaust passage 26 except at both ends thereof. An intercooler 18 is provided in the intake passage 3 between an intake-side compressor of the turbocharger 11 and the intake throttle valve 16. This intercooler 18 is designed to cool the intake air that has risen in temperature by being supercharged by the turbocharger 11.

Besides, a first purification member 30 that purifies exhaust gas is provided downstream of an exhaust-side turbine of the turbocharger 11, in the exhaust passage 26 except at both the ends thereof. An oxidation catalyst 31 and a DPF catalyst 32 are disposed in series with the flow direction of exhaust gas, inside this first purification member 30.

The oxidation catalyst 31 supports a catalyst that subjects HC in exhaust gas to an oxidation treatment. Besides, the DPF catalyst 32 is a filter that collects particulate matters (PM) in exhaust gas, and is constituted by a porous ceramic. Furthermore, the DPF catalyst 32 supports a catalyst for promoting the oxidation of PM. The PM in exhaust gas is collected when passing through a porous wall of the DPF catalyst 32.

Besides, a fuel addition valve 5 for supplying fuel as an addition agent to the oxidation catalyst 31 and the DPF catalyst 32 is provided in the vicinity of an aggregate portion of the exhaust manifold 8. This fuel addition valve 5 is connected to the supply pump 10 via a fuel supply pipe 27. Incidentally, the position where the fuel addition valve 5 is disposed can also be changed in a discretionary manner as long as the fuel addition valve 5 is located upstream of the first purification member 30 in an exhaust system.

Besides, a second purification member 40 that purifies exhaust gas is provided downstream of the first purification member 30 in the exhaust passage 26 except at both the ends thereof. A selective reduction-type NOx catalyst (hereinafter referred to as an SCR catalyst) 41 as an exhaust gas purification catalyst that reduces and purifies the NOx in exhaust gas with the aid of a reducing agent is disposed inside the second purification member 40.

Furthermore, a third purification member 50 that purifies exhaust gas is provided downstream of the second purification member 40 in the exhaust passage 26 except at both the ends thereof. An ammonia oxidation catalyst 51 that purifies the ammonia in exhaust gas is disposed inside the third purification member 50.

The engine 1 is provided with a urea water supply mechanism 200 that supplies urea water as a reducing agent to the aforementioned SCR catalyst 41. The urea water supply mechanism 200 is constituted of a tank 210 that stores urea water, a urea addition valve 230 that injects and adds urea water into the exhaust passage 26, a supply passage 240 that connects the urea addition valve 230 and the tank 210 to each other, a pump 220 that is provided in the supply passage 240 except at both ends thereof, a level sensor 250 that detects the residual quantity of the urea water stored in the tank 210, and the like. Incidentally, the level sensor 250 is a detector that detects the residual quantity of the urea water in the tank 210 by detecting the liquid surface level of the urea water stored in the tank 210. The sensor value of the level sensor 250 will be referred to hereinafter as a level sensor value L. Besides, the tank 210, the level sensor 250, and a later-described control unit 80 constitute the liquid quantity detecting device.

The urea addition valve 230 is provided in the exhaust passage 26 between the first purification member 30 and the second purification member 40. An injection hole of the urea addition valve 230 is opened toward the SCR catalyst 41. When this urea addition valve 230 is opened, urea water is injected and supplied into the exhaust passage 26 via the supply passage 240.

The pump 220 is an electric pump, and delivers urea water from the tank 210 toward the urea addition valve 230 during positive rotation. On the other hand, the pump 220 delivers urea water from the urea addition valve 230 toward the tank 210 during reverse rotation. That is, during reverse rotation of the pump 220, urea water is recovered from the urea addition valve 230 and the supply passage 240 and returned to the tank 210.

Besides, a dispersion plate 60 that promotes atomization of the urea water injected from the urea addition valve 230 by dispersing the urea water is provided in the exhaust passage 26 between the urea addition valve 230 and the SCR catalyst 41.

The urea water added from the urea addition valve 230 changes into ammonia through hydrolysis with the aid of exhaust heat. This ammonia is adsorbed by the SCR catalyst 41. Then, NOx is reduced and purified by the ammonia adsorbed by the SCR catalyst 41.

In addition, the engine 1 is equipped with an exhaust gas recirculation device (hereinafter referred to as an EGR device). This EGR device is a device that lowers the temperature of combustion in the cylinders and reduces the generation quantity of NOx by introducing part of exhaust gas into intake air. This EGR device is constituted of an EGR passage 13 that establishes communication between the intake passage 3 and the exhaust manifold 8, an EGR valve 15 that is provided in the EGR passage 13, an EGR cooler 14, and the like. The opening degree of the EGR valve 15 is adjusted, so the recirculation quantity of the exhaust gas introduced into the intake passage 3 from the exhaust passage 26, namely, the quantity of so-called external EGR is regulated. Besides, the temperature of the exhaust gas flowing in the EGR passage 13 is lowered by the EGR cooler 14.

The engine 1 is mounted with various sensors and switches for detecting the engine operation state. For example, an airflow meter 19 detects an intake air quantity GA in the intake passage 3. A throttle valve opening degree sensor 20 detects the opening degree of the intake throttle valve 16. An engine rotational speed sensor 21 detects the rotational speed of a crankshaft, namely, an engine rotational speed NE. An accelerator operation quantity sensor 22 detects the depression quantity of an accelerator pedal, namely, an accelerator operation quantity ACCP. An outside air temperature sensor 23 detects an outside air temperature THout. A vehicle speed sensor 24 detects a vehicle speed SPD of a vehicle that is mounted with the engine 1. An acceleration sensor 25 outputs a signal corresponding to the acceleration of the vehicle and the angle of inclination of a road surface. The acceleration of the vehicle, the state of inclination of the road surface, and the like are calculated based on this signal (hereinafter referred to as an acceleration sensor value GS). Incidentally, in the present embodiment of the invention, when the vehicle accelerates or when the traveling road surface is an ascending slope, a positive value is output as the acceleration sensor value GS. On the other hand, when the vehicle decelerates or when the traveling road surface is a descending slope, a negative value is output as the value of the acceleration sensor value GS. Then, when the vehicle travels at a constant speed or on a flat road with almost no gradient, a value close to "0" is output as the acceleration sensor value GS.

Besides, a first exhaust gas temperature sensor 100 that is provided upstream of the oxidation catalyst 31 detects a first exhaust gas temperature TH1 as a temperature of the exhaust gas that has not flowed into the oxidation catalyst 31. A differential pressure sensor 110 detects a pressure difference ΔP between an exhaust pressure upstream of the DPF catalyst 32 and an exhaust pressure downstream of the DPF catalyst 32.

A second exhaust gas temperature sensor 120 and a first NOx sensor 130 are provided upstream of the urea addition valve 230, in the exhaust passage 26 between the first purification member 30 and the second purification member 40. The second exhaust gas temperature sensor 120 detects a second exhaust gas temperature TH2 as a temperature of the exhaust gas that has not flowed into the SCR catalyst 41. The first NOx sensor 130 detects a first NOx concentration N1 as a concentration of NOx in the exhaust gas that has not flowed into the SCR catalyst 41.

A second NOx sensor 140 that detects a second NOx concentration N2 as a concentration of NOx in the exhaust gas that has passed through the SCR catalyst 41 is provided in the exhaust passage 26 downstream of the third purification member 50.

Outputs of these various sensors and the like are input to the control unit 80. This control unit 80 is mainly constituted by a microcomputer that is equipped with a central processing unit (a CPU), a read only memory (a ROM) that stores various programs, maps and the like in advance, a random access memory (a RAM) that temporarily stores a calculation result of the CPU and the like, a timer counter, an input interface, an output interface and the like.

Then, the control unit 80 performs various kinds of control of the engine 1, for example, fuel injection quantity control and fuel injection timing control of the fuel injection valves 4a to 4d and the fuel addition valve 5, discharge pressure control of the supply pump 10, and drive quantity control of an actuator 17 that opens/closes the intake throttle valve 16, opening degree control of the EGR valve 15 and the like.

The control unit 80 performs addition control of urea water by the aforementioned urea addition valve 230 as one kind of exhaust gas purification control. In this addition control, a target addition quantity QE as a target value of a urea addition quantity that is needed to subject the NOx discharged from the engine 1 to a reduction treatment is calculated based on the engine operation state or the like. Then, the valve-open state of the urea addition valve 230 is controlled such that a quantity of urea water corresponding to the target addition quantity QE is injected from the urea addition valve 230.

In the present embodiment of the invention, a residual quantity NR of the urea water in the tank 210 is updated, and a driver of the vehicle is notified of the residual quantity of urea water when the residual quantity NR of urea water is small. This process will be described hereinafter. Incidentally, this process is executed on a predetermined cycle by the control unit 80.

As shown in FIG. 2, when the present process is started, it is determined whether or not the level sensor value L is stable (S100). In this case, when the fluctuation width of the level sensor value L has remained equal to or smaller than a predetermined value H1 for a predetermined time T1 or more, it is determined that the level sensor value L is stable. Incidentally, values that are appropriate in determining that the level sensor value L is stable are set in advance as the predetermined value H1 and the predetermined time T1, respectively.

If the level sensor value L is not stable (NO in S100), the residual quantity NR of urea water is updated by setting a post-smoothing process level sensor value LN that is obtained by subjecting the current level sensor value L to a smoothing process, as the residual quantity NR of urea water during the current execution of the process (S140).

On the other hand, if the level sensor value L is stable (YES in S100), it is determined whether or not the acceleration sensor 25 normally functions (S110). This determination on the normality of the acceleration sensor 25 can be made in a discretionary manner.

If it is determined that the acceleration sensor 25 normally functions (YES in S110), it is determined whether or not the acceleration sensor value GS is larger than a threshold B and smaller than a threshold C (S120). The threshold B is a negative value, and the threshold C is set to a positive value. Then, values that make it possible to determine that the acceleration sensor value GS is a value close to "0", namely, that the vehicle travels at a constant speed or travels on a flat road with almost no gradient are set as the threshold B and the threshold C, respectively.

Then, if the acceleration sensor value GS is larger than the threshold B and smaller than the threshold C (YES in S120), the residual quantity NR of urea water is updated by setting the residual quantity of urea water detected based on the level sensor value L as the residual quantity NR of urea water during the current execution of the process (S130). The process in this step S130 is equivalent to the second update process of setting the residual quantity of the addition liquid detected based on the sensor value of the level sensor as the updated residual quantity of the addition liquid.

On the other hand, if the acceleration sensor value GS is equal to or smaller than the threshold B or if the acceleration sensor value GS is equal to or larger than the threshold C (NO in S120), the process in step S170 is executed. In this step S170, the residual quantity NR of urea water is updated by setting a value that is obtained by subtracting an integrated addition quantity NS from the residual quantity NR of urea water that has not been updated through the current execution of the process (i.e., the last-updated residual quantity NR of urea water), as the residual quantity NR of urea water during the current execution of the process. The integrated addition quantity NS is a total quantity of the urea water added to the exhaust passage 26 from the last update of the residual quantity NR of urea water to the current update of the residual quantity NR of urea water, and is calculated, for example, by integrating the aforementioned target addition quantity QE. Besides, in this step S170, when the residual quantity NR of urea water is updated, the integrated addition quantity NS is reset to "0", and the process of integrating the addition quantity of urea water is resumed. Incidentally, the process in this step S170 is equivalent to the first update process of subtracting a total quantity of the addition liquid added to the exhaust passage 26 from the last update of the residual quantity of the addition liquid to the current update of the residual quantity of the addition liquid from the last-updated residual quantity of the addition liquid, and setting a value obtained through subtraction as the updated residual quantity of the addition liquid.

If it is determined in the aforementioned step S110 that the acceleration sensor 25 does not normally function, namely, that there is an abnormality in the acceleration sensor 25 and the acceleration sensor value GS is a wrong value, it is determined whether or not the vehicle is stopped (S150). In this step S150, if the vehicle speed SPD is "0", it is determined that the vehicle is stopped. Incidentally, in making a determination on the stoppage of the vehicle in step S150, when the vehicle speed SPD is a very low speed close to "0", the vehicle may be regarded as stopped. Incidentally, the determination condition in this step S150 is equivalent to the first condition including the condition that the vehicle be stopped.

Then, if it is determined that the vehicle is stopped (YES in S150), the process in the aforementioned step S170 is executed, and the residual quantity NR of urea water is updated through the aforementioned first update process.

On the other hand, if it is determined that the vehicle travels (NO in S150), it is determined whether or not the level sensor value L has been stable for a long time (S160). In this step S160, if the fluctuation width of the level sensor value L has remained equal to or smaller than a predetermined value H2 for a predetermined time T2 or more, it is determined that the level sensor value L has been stable for a long time. Incidentally, values that are appropriate in determining that the level sensor value L has been stable for a long time to such an extent that it is possible to determine that the vehicle travels on a flat road at a constant speed are set in advance as the predetermined value H2 and the predetermined time T2, respectively. In particular, the predetermined time T2 is set longer than the aforementioned predetermined time T1. Besides, the determination conditions in step S150 and step S160 are equivalent to the second condition including the condition that the fluctuation width of the sensor value of the level sensor have remained equal to or smaller than the predetermined value for the predetermined time or more during traveling of the vehicle.

Then, if the level sensor value L has been stable for a long time (YES in S160), the process in the aforementioned step S130 is executed, and the residual quantity NR of urea water is updated through the aforementioned second update process.

On the other hand, if the level sensor value L has not been stable for a long time (NO in S160), the process in the aforementioned step S170 is executed, and the residual quantity NR of urea water is updated through the aforementioned first update process.

When the residual quantity NR of urea water is updated in any one of step S130, step S140 and step S170, it is determined whether or not the latest updated residual quantity NR of urea water is equal to or smaller than a threshold α (S180). A value that makes it possible to determine that the residual quantity NR of urea water has decreased to such an extent that the process of notifying the driver of the residual quantity of urea water needs to be executed is set in advance as the threshold α.

Then, if the residual quantity NR of urea water is larger than the threshold α (NO in S180), the present process is temporarily terminated. On the other hand, if the residual quantity NR of urea water is equal to or smaller than the threshold α (YES in S180), the process of notifying the driver or the like is executed (S190), and the present process is temporarily terminated. When this notification process is executed, a warning encouraging the replenishment of urea water is issued acoustically, optically or through display etc. on a meter panel or the like.

Incidentally, the control unit 80 that executes the processes from step S100 to step S170 constitutes the update unit that updates the residual quantity of the addition liquid in the tank. Besides, the control unit 80 that executes the processes in step S180 and step S190 constitutes the notification unit that gives a notification on the residual quantity of the addition liquid when the updated residual quantity of the addition liquid is equal to or smaller than the predetermined threshold.

Next, an operation resulting from the aforementioned series of processes will be described. The vehicle is stopped not only on a flat road but also on a slope. Therefore, when the vehicle is stopped, there is also a possibility of the vehicle being stopped on a slope, and the possibility of the liquid surface in the tank 210 being inclined cannot be categorically denied. Therefore, when the vehicle is stopped, the residual quantity of urea water detected based on the level sensor value L cannot be completely trusted. On the other hand, in updating the residual quantity NR of urea water, the total quantity of the addition liquid added to the exhaust passage 26 from the last update of the residual quantity NR of urea water to the current update of the residual quantity NR of urea water is subtracted from the last-updated residual quantity NR of urea water. Then, in the case where the value obtained through subtraction is set as the residual quantity NR of urea water, namely, in the case where the current residual quantity NR of urea water is calculated by subtracting a later-consumed quantity of the addition liquid from the last-updated residual quantity NR of urea water, the current level sensor value L is irrelevant in updating the residual quantity NR of urea water. Accordingly, when the residual quantity NR of urea water is thus updated, the residual quantity of the urea water in the tank 210 can be grasped without being influenced by the inclination of the liquid surface even if the vehicle is stopped on a slope.

Thus, if it is determined in the aforementioned step S150 that the vehicle is stopped (YES in S150), the aforementioned first update process of obtaining the current residual quantity NR of urea water by subtracting the integrated addition quantity NS as the later-consumed quantity of urea water from the last-updated residual quantity NR of urea water is executed. Accordingly, when the vehicle is stopped and there is even the slightest possibility of the liquid surface of urea water being inclined, the residual quantity NR of urea water is updated through the aforementioned first update process that is not influenced by the inclination of the liquid surface. Therefore, the error between the actual quantity of the urea water remaining in the tank 210 and the updated residual quantity NR of urea water is suppressed, so misinformation on the residual quantity of urea water is restrained from being transmitted.

Besides, it is determined in step S100 whether or not the liquid surface of the urea water stored in the tank 210 is stable without much swaying, by determining whether or not the level sensor value L is stable without much fluctuating. Then, if the level sensor value L is stable without much fluctuating (YES in S100), it is determined that the level sensor value L is suited to detect the residual quantity NR of urea water based on the sensor value L.

By the way, when the vehicle accelerates or decelerates at a constant acceleration or travels on a slope at a constant speed, the liquid surface of urea water does not sway much, but is inclined. Therefore, if the residual quantity NR of urea water is detected based on the level sensor value L in this state, the accuracy of the detected residual quantity NR of urea water is low.

Besides, when the vehicle travels on a flat road at a constant speed, the liquid surface of the urea water stored in the tank 210 is almost horizontal, and is stable without much swaying. Therefore, in the case where the residual quantity NR of urea water is detected based on the level sensor value L in this state, the actual residual quantity of urea water is appropriately reflected by the level sensor value L, so the residual quantity NR of urea water can be accurately detected. Accordingly, when the vehicle travels on a flat road at a constant speed, the residual quantity of urea water can be accurately detected by setting the residual quantity of urea water detected based on the level sensor value L as the updated residual quantity NR of urea water in updating the residual quantity NR of urea water.

It should be noted herein that when the vehicle travels on a flat road at a constant speed, the liquid surface of the urea water stored in the tank 210 is more likely to be held horizontal than when the vehicle accelerates or decelerates at a constant acceleration or when the vehicle travels on a slope at a constant speed. That is, the change in the level sensor value L remains small for a relatively long time when the vehicle travels on a flat road at a constant speed. Accordingly, when the fluctuation width of the level sensor value L has remained equal to or smaller than a predetermined value for a predetermined time or more, it can be determined that the level sensor value L has been stable for a long time, and that the vehicle travels on a flat road at a constant speed.

Thus, the aforementioned second condition is provided to determine that the vehicle travels on a flat road at a constant speed and the liquid surface of the urea water stored in the tank 210 is held horizontal, namely, that the liquid surface of urea water is likely not to be inclined. Then, if the second condition is fulfilled (NO in step S150 and YES in step S160), the aforementioned update process of obtaining the current residual quantity NR of urea water based on the level sensor value L is executed by executing the process in step S130. Accordingly, when the liquid surface of urea water is likely not to be inclined, the residual quantity NR of urea water is updated according to a method that is more accurate than the aforementioned first update process. Therefore, this also serves to restrain misinformation on the residual quantity of urea water from being transmitted.

Besides, the vehicle is provided with the acceleration sensor 25. The inclination of a road surface can be detected based on the acceleration sensor value GS as a sensor value of this acceleration sensor 25. Thus, in step S120, if the acceleration sensor value GS is a value outside a predetermined range, namely, if there is established a relationship: "the threshold B ≥ the acceleration sensor value GS" or "the acceleration sensor value GS ≥ the threshold C" (NO in S120), it is determined that the road surface is inclined, and that the liquid surface of urea water is also inclined. Then in this case, the residual quantity NR of urea water is updated through the aforementioned first update process (step S170) that is not influenced by the inclination of the liquid surface.

It should be noted herein that when there is an abnormality in the acceleration sensor 25, the determination on inclination with the aid of the acceleration sensor value GS, which is carried out in step S120, cannot be made. In this respect, according to the present embodiment of the invention, if there is an abnormality in the acceleration sensor 25 (NO in S110), it is determined in step S150 whether or not the aforementioned first condition is fulfilled. Then, if the first condition is fulfilled (YES in S 150), the possibility of the liquid surface being inclined cannot be denied, so the residual quantity NR of urea water is updated through the aforementioned first update process (S170) that is not influenced by the inclination of the liquid surface. Accordingly, even when there is an abnormality in the acceleration sensor 25, the residual quantity NR of urea water is appropriately updated.

Besides, in step S120, if the acceleration sensor value GS is a value within the predetermined range, namely, if there is established a relationship: "the threshold B < the acceleration sensor value GS < the threshold C" (YES in S120), it is determined that the road surface is not inclined, and that the liquid surface of urea water is also horizontal. Then in this case, the residual quantity NR of urea water is updated through the aforementioned second update process (S130) of updating the residual quantity NR of urea water based on the level sensor value L.

It should be noted herein that when there is an abnormality in the acceleration sensor 25, the determination on inclination with the aid of the acceleration sensor value GS, which is carried out in step S120, cannot be made. In this respect, according to the present embodiment of the invention, if there is an abnormality in the acceleration sensor 25 (NO in S110), the determination processes in step S150 and step S160 are executed to determine whether or not the aforementioned second condition is fulfilled. Then, if the second condition is fulfilled (YES in step S100, NO in step S150, and YES in step S160), it can be determined that the liquid surface of urea water is horizontal and stable, so the residual quantity NR of urea water is updated through the aforementioned second update process (S130). Accordingly, the residual quantity NR of urea water is appropriately updated even when there is an abnormality in the acceleration sensor 25.

Besides, if the result of the determination in step S160 is negative (NO in S160), the vehicle may accelerate or decelerate at a constant acceleration or may travel on a slope at a constant speed, and the liquid surface of urea water may be inclined. Thus, in this case, the residual quantity NR of urea water is updated through the aforementioned first update process (S170) that is not influenced by the inclination of the liquid surface. Accordingly, in this case as well, the residual quantity NR of urea water is appropriately updated.

As described above, the following effects can be obtained according to the present embodiment of the invention.
(1) When the residual quantity NR of urea water is equal to or smaller than the threshold α, a notification on the residual quantity of urea water is given. It should be noted herein that when the first condition including the condition that the vehicle be stopped is fulfilled and the possibility of the liquid surface in the tank 210 being inclined cannot be categorically denied, the residual quantity NR of urea water is updated through the first update process that is not influenced by the inclination of the liquid surface of urea water, in updating the residual quantity NR of urea water. Therefore, misinformation on the residual quantity of urea water can be restrained from being transmitted.
(2) When the second condition including the condition that the fluctuation width of the level sensor value L have remained equal to or smaller than the predetermined value H2 for the predetermined time T2 or more during traveling of the vehicle is fulfilled, it is determined that the liquid surface of urea water is likely not to be inclined. Then, in this case, the residual quantity NR of urea water is updated through the aforementioned second update process of obtaining the current residual quantity NR of urea water based on the level sensor value L. Therefore, this also makes it possible to restrain misinformation on the residual quantity of urea water from being transmitted.
(3) It is determined, based on the acceleration sensor value GS, whether or not the liquid surface of urea water is inclined. When it is determined that the liquid surface is inclined, the residual quantity NR of urea water is updated through the first update process that is not influenced by the inclination of the liquid surface of urea water. It should be noted herein that when the aforementioned first condition is fulfilled and the possibility of the liquid surface in the tank 210 being inclined cannot be categorically denied while there is an abnormality in the acceleration sensor 25, the residual quantity NR of urea water is updated through the first update process that is not influenced by the inclination of the liquid surface of urea water, in updating the residual quantity NR of urea water. Therefore, the residual quantity NR of urea water can be appropriately updated even when there is an abnormality in the acceleration sensor 25.
(4) It is determined, based on the acceleration sensor value GS, whether or not the liquid surface of urea water is inclined. When it is determined that the liquid surface is not inclined, the residual quantity NR of urea water is updated through the aforementioned second update process of obtaining the current residual quantity NR of urea water based on the level sensor value L. It should be noted herein that when the aforementioned second condition is fulfilled and it can be determined that the liquid surface of urea water is likely not to be inclined while there is an abnormality in the acceleration sensor 25, the residual quantity NR of urea water is updated through the aforementioned second update process of obtaining the current residual quantity NR of urea water based on the level sensor value L. Therefore, the residual quantity NR of urea water can be appropriately updated even when there is an abnormality in the acceleration sensor 25.

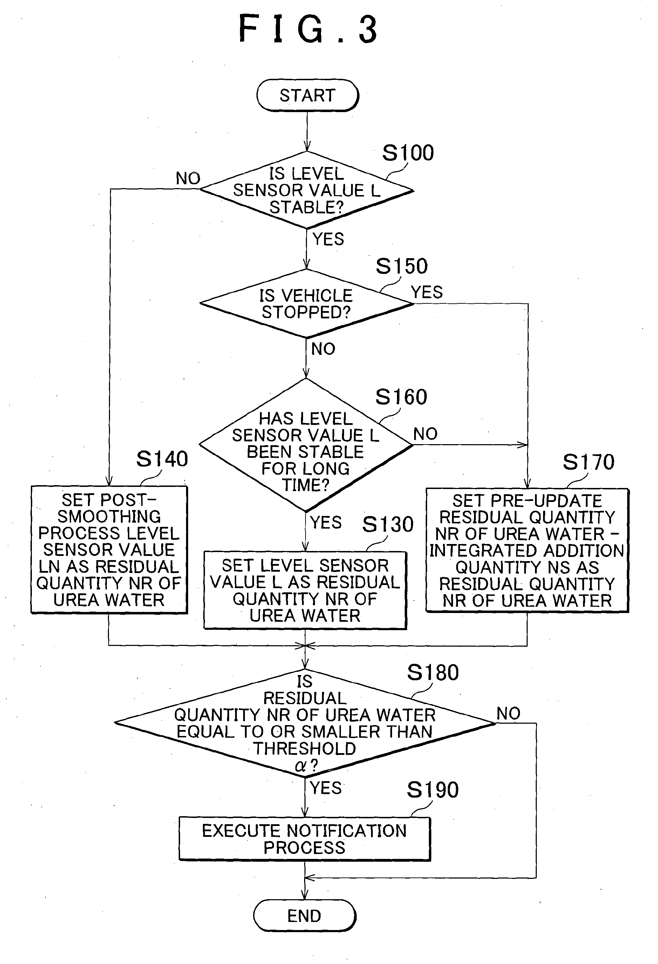

Incidentally, the aforementioned embodiment of the invention can also be carried out after being modified as follows. In the aforementioned embodiment of the invention, the processes starting from step S150 are executed when there is an abnormality in the acceleration sensor 25. In addition, in the case of a vehicle that is not provided with the acceleration sensor 25, the residual quantity NR of urea water in the tank 210 may be updated according to a processing procedure in which the respective processes in step S110 and step S120 shown previously in FIG. 2 are omitted, and the driver of the vehicle may be notified of the residual quantity of urea water when the residual quantity NR of urea water is small. The processing procedure in this modification example is shown in FIG. 3.

As shown in FIG. 3, in the processing procedure according to this modification example, if it is determined in step S100 that the level sensor value L is stable (YES in S100), the processes starting from the aforementioned step S150, and in some cases, the process in step S130 and the like are sequentially executed, as opposed to the aforementioned embodiment of the invention. This modification example also makes it possible to obtain the above-mentioned effects (1) and (2). Therefore, misinformation on the residual quantity of urea water can be restrained from being transmitted by executing the processing procedure according to this modification example in, for example, a vehicle that is not equipped with the acceleration sensor 25.

The process in step S100 shown previously in FIG. 2 is a process for determining whether or not the level sensor value L is suited to detect the residual quantity NR of urea water based on the sensor value L. Accordingly, the process in this step S100 is not absolutely required to be executed first in the series of processing procedures shown in FIG. 2. The process in step S100 may be executed if the result of the determination in step S120 or step S160 is positive. In the case of this modification example, it is appropriate to subsequently execute the processes starting from step S130 if the result of the determination in the process in step 100 is positive, and to subsequently execute the processes starting from step S140 if the result of the determination in the process in step S100 is negative.

By the same token, in the series of processing procedures shown previously in FIG. 3 as well, the process in step S100 may be executed if the result of the determination in step S160 is positive. In the case of this modification example as well, it is appropriate to subsequently execute the processes starting from step S130 if the result of the determination in the process in step 100 is positive, and to subsequently execute the processes starting from step S140 if the result of the determination in the process in step S100 is negative.

The residual quantity of the urea water stored in the tank 210 is detected. However, the residual quantity of an addition liquid other than this urea water may be detected.

## Claims

1. A liquid quantity detecting device for a vehicle, the vehicle including an internal combustion engine (1), an exhaust gas control device configured to add an addition liquid for purifying exhaust gas to an exhaust passage (26) of the internal combustion engine (1), a tank (210) that stores the addition liquid, and a level sensor (250) that detects a liquid surface level of the addition liquid stored in the tank (210), the liquid quantity detecting device comprising:
an update unit configured to
i) update a residual quantity of the addition liquid in the tank (210),
ii) execute a first update process which is a process of subtracting a total quantity of the addition liquid from a last-updated residual quantity of the addition liquid, the total quantity being a quantity of the addition liquid added to the exhaust passage (26) during a period from last update of the residual quantity of the addition liquid to current update of the residual quantity of the addition liquid, and
iii) set a value obtained through subtraction as an updated residual quantity of the addition liquid; and
a notification unit configured to give a notification on the residual quantity of the addition liquid when the residual quantity of the addition liquid updated by the update unit is equal to or smaller than a predetermined value; and **characterized in that** the update unit is configured to execute the first update process when a first condition including a condition that the vehicle is stationary is fulfilled, and **in that** the update unit is configured to execute a second update process when a second condition is fulfilled, the second update process being a process of setting a residual quantity of the addition liquid based on a sensor value detected by the level sensor (250) as the updated residual quantity of the addition liquid, and the second condition including a condition that i) the vehicle travels for more than a predetermined time and ii) a fluctuation width of the sensor value of the level sensor (250) remains equal to or smaller than a predetermined value for more than the predetermined time.

2. The liquid quantity detecting device according to claim 1, wherein
the addition liquid is a reducing liquid that is added to reduce and purify NOx in exhaust gas.

## Patentansprüche

1. Flüssigkeitsmengen-Erfassungsvorrichtung für ein Fahrzeug, wobei das Fahrzeug einen Verbrennungsmotor (1), eine Abgas-Steuervorrichtung, die konfiguriert ist, um eine Zugabeflüssigkeit zum Reinigen von Abgas zu einem Abgasdurchgang (26) des Verbrennungsmotors (1) hinzuzufügen, einen Tank (210), der die Zugabeflüssigkeit beinhaltet, und einen Pegelsensor (250), der einen Flüssigkeitsoberflächenpegel der Zugabeflüssigkeit, die in dem Tank (210) beinhaltet ist, erfasst, aufweist, wobei die Flüssigkeitsmenge-Erfassungsvorrichtung umfasst:
eine Aktualisierungseinheit, die konfiguriert ist, um
i) eine Restmenge der Zugabeflüssigkeit in dem Tank (210) zu aktualisieren,
ii) einen ersten Aktualisierungsvorgang auszuführen, der ein Vorgang zum Subtrahieren einer Gesamtmenge der Zugabeflüssigkeit von einer zuletzt aktualisierten Restmenge der Zugabeflüssigkeit ist, wobei die Gesamtmenge eine Menge der Zugabeflüssigkeit ist, die zu dem Abgasdurchgang (26) während einer Zeitdauer von einer letzten Aktualisierung der Restmenge der Zugabeflüssigkeit bis zu einer aktuellen Aktualisierung der Restmenge der Zugabeflüssigkeit hinzugefügt wird, und
iii) einen Wert, der durch Subtraktion erhalten wird, als eine aktualisierte Restmenge der Zugabeflüssigkeit festzulegen, und
eine Benachrichtigungseinheit, die konfiguriert ist, um eine Benachrichtigung über die Restmenge der Zugabeflüssigkeit zu geben, wenn die Restmenge der Zugabeflüssigkeit, die durch die Aktualisierungseinheit aktualisiert wird, kleiner oder gleich einem vorbestimmten Wert ist, und **dadurch gekennzeichnet, dass**
die Aktualisierungseinheit konfiguriert ist, um den ersten Aktualisierungsvorgang auszuführen, wenn eine erste Bedingung, die eine Bedingung aufweist, dass das Fahrzeug stationär ist, erfüllt ist, und dadurch, dass die Aktualisierungseinheit konfiguriert ist, um einen zweiten Aktualisierungsvorgang auszuführen, wenn eine zweite Bedingung erfüllt ist, wobei der zweite Aktualisierungsvorgang ein Vorgang zum Festlegen einer Restmenge der Zugabeflüssigkeit basierend auf einem Sensorwert, der durch den Pegelsensor (250) erfasst wird, als die aktualisierte Restmenge der Zugabeflüssigkeit ist und die zweite Bedingung eine Bedingung aufweist, dass i) das Fahrzeug länger als eine vorbestimmte Zeit fährt und ii) eine Schwankungsbreite des Sensorwerts des Pegelsensors (250) länger als die vorbestimmte Zeit kleiner oder gleich einem vorbestimmten Wert bleibt.

2. Flüssigkeitsmenge-Erfassungsvorrichtung nach Anspruch 1, wobei die Zugabeflüssigkeit eine reduzierende Flüssigkeit ist, die hinzugefügt wird, um NOx in Abgas zu reduzieren und zu reinigen.

## Revendications

1. Dispositif de détection de quantité de liquide pour un véhicule, le véhicule comprenant un moteur à combustion interne (1), un dispositif de commande de gaz d'échappement configuré pour ajouter du liquide d'apport pour purifier du gaz échappement dans un passage d'échappement (26) du moteur à combustion interne (1), un réservoir (210) qui stocke le liquide d'apport, et un capteur de niveau (250) qui détecte un niveau de surface de liquide du liquide d'apport stocké dans le réservoir (210), le dispositif de détection de quantité de liquide comportant :
une unité de mise à jour configurée pour
i) mettre à jour une quantité résiduelle du liquide d'apport dans le réservoir (210),
ii) exécuter un premier processus de mise à jour qui est un processus de soustraction d'une quantité totale du liquide d'apport d'une quantité résiduelle de dernière mise à jour du liquide d'apport, la quantité totale étant une quantité du liquide d'apport ajoutée au passage d'échappement (26) au cours d'une période depuis une dernière mise à jour de la quantité résiduelle du liquide d'apport jusqu'à la mise à jour actuelle de la quantité résiduelle du liquide d'apport, et
iii) établir une valeur obtenue par soustraction comme quantité résiduelle mise à jour du liquide d'apport ; et
une unité de notification configurée pour délivrer une notification sur la quantité résiduelle du liquide d'apport quand la quantité résiduelle du liquide d'apport mise à jour par l'unité de mise à jour est égale ou inférieure à une valeur prédéterminée ; et **caractérisé en ce que**
l'unité de mise à jour est configurée pour exécuter le premier processus de mise à jour quand une première condition comprenant une condition dans laquelle le véhicule est immobile est remplie, et **en ce que** l'unité de mise à jour est configurée pour exécuter un deuxième processus de mise à jour quand une deuxième condition est remplie, le deuxième processus de mise à jour étant un processus d'établissement d'une quantité résiduelle du liquide d'apport sur la base d'une valeur de capteur détectée par le capteur de niveau (250) comme quantité résiduelle mise à jour du liquide d'apport, et la deuxième condition comprenant une condition que i) le véhicule se déplace plus longtemps qu'un temps prédéterminé et ii) une plage de fluctuation de la valeur de capteur du capteur de niveau (250) reste égale ou inférieure à une valeur prédéterminée plus longtemps que le temps prédéterminé.

2. Dispositif de détection de quantité de liquide selon la revendication 1, dans lequel
le liquide d'apport est un liquide de réduction qui est ajouté pour réduire et purifier du NOx dans du gaz d'échappement.
